# FASCICULE DE BREVET EUROPEEN

(11) **EP 2 211 613 B1**
(45) Date de publication et mention de la délivrance du brevet: **01.06.2011**
(21) Numéro de dépôt: 09784416.1
(22) Date de dépôt: 22.06.2009
(51) Int. Cl.: A01N 33/12, A01N 55/10, C08L 83/04, A01N 25/34, A01N 25/08, A01N 25/10, A01N 25/12, A01P 1/00

(54) **PRODUIT EN ELASTOMERE DE SILICONE PRESENTANT UNE ACTIVITE BIOCIDE**
SILIKONELASTOMERPRODUKT MIT BIOZIDER AKTIVITÄT
SILICONE ELASTOMER PRODUCT EXHIBITING A BIOCIDAL ACTIVITY

(30) Priorité: 24.06.2008 FR 0854159
(43) Date de publication de la demande: 04.08.2010
(73) Titulaire: Saint-Gobain Performance Plastics France, 89120 Charny (FR)
(72) Inventeur: FERBER, Marc, 06410 Biot (FR); LEBARON, Christophe, 45120 Chalette Sur Loing (FR); RENAULD, Franck, 51200 Epernay (FR)
(74) Mandataire: Lucas, Francois
(86) Numéro de dépôt international: PCT/FR2009/051183
(87) Numéro de publication internationale: WO 2010/007284

(56) Documents cités:
- EP-A2- 1 217 052
- WO-A1-2006/102367
- WO-A2-99/32157
- WO-A2-2004/105687
- WO-A2-2007/124855
- ANONYMOUS: "MATERIAL SAFETY DATA SHEET:SWY-2" THE CLAY MINERALS SOCIETY, [Online] 2 mai 2001 (2001-05-02), pages 1-4, XP002517820 Extrait de l'Internet: URL:http://www.agry.purdue.edu/cjohnston/s ourceclays/SWy-2.pdf>
- HUI LI ET AL.: "Geochemical Modulation of Pesticide Sorption on Smectite Clay" ENVIRONMENTAL SCIENCE TECHNOLOGY, vol. 38, no. 20, 2004, pages 5393-5399, XP002517821

## Description

La présente invention se rapporte au domaine des produits antimicrobiens et biocompatibles, notamment pour des applications alimentaires. Plus particulièrement l'invention concerne un produit présentant une activité biocide antimicrobienne à sa surface et obtenu à partir d'un système organosilicique à base silicone.

Le but de la présente invention est de proposer des produits présentant une activité antimicrobienne mais compatibles notamment avec une utilisation dans le domaine de l'alimentaire. L'un des exemples possibles d'utilisation d'un tel produit est notamment la confection de tubes pour l'acheminement de liquides alimentaires tels que du café, des jus de fruit, des soupes etc.

Ainsi, à titre d'exemple, si un tube servant à acheminer un liquide alimentaire est utilisé dans une machine distributrice, en l'absence de tout traitement antimicrobien du tube, il est nécessaire de le changer très fréquemment pour éviter tout risque d'intoxication alimentaire liée au développement de colonies de bactéries ou moisissures d'abord à la surface de la lumière interne puis dans le liquide stagnant. De tels changements sont très couteux et on conçoit bien que la moindre négligence peut avoir de très graves conséquences sanitaires.

L'utilisation de différentes matrices polymériques pour la confection de tubes alimentaires antimicrobiens est déjà bien connue : on identifie ainsi des tubes alimentaires obtenus avec des matrices de différentes natures, par exemple de PVC, de TPE, de TPU ou de silicone. En règle générale, il est courant à l'heure actuelle de disperser dans ces matrices un agent présentant une action antimicrobienne, le plus souvent à base de sels d'argent, pour limiter notamment le développement des bactéries telles que *Pseumodas Aeruginosa* ou *Escherichia Coli*, qui sont les plus dangereuses pour la santé humaine.

Plus récemment, il a été trouvé qu'il était possible de substituer à l'argent d'autres molécules ayant un effet antimicrobien tout aussi efficace mais moins couteuses. On peut notamment citer les dérivés d'ammonium quaternaire dont l'action biocide a pu être démontrée, par exemple dans les demandes de brevet WO 99/32157 et WO 2006/102367.

Plus récemment encore, il a également été décrit, dans le brevet US 6,572,926 B1, l'utilisation de sels d'ammonium quaternaire présentant également une terminaison du type alcoxyalkylsilane, apte à polymériser selon un réseau interpénétrant dans une matrice polymère du type précité.

Ces solutions permettent de résoudre le problème précédemment exposé d'empêcher ou au moins de limiter fortement le développement de colonies de bactéries. Elles présentent cependant l'inconvénient majeur qu'une partie des molécules biocides sont continuellement relâchée dans la lumière du tube et dans le liquide y circulant. Même si la quantité de matière ainsi relâchée s'avère minime, elle constitue une autre pollution des liquides alimentaires dont les conséquences sont encore aujourd'hui mal connues.

Le but de la présente invention est ainsi de fournir un produit obtenu à partir d'un matériau nouveau dont l'activité biocide permet de limiter fortement la prolifération des bactéries et autres microorganismes à sa surface mais inerte vis à vis du milieu extérieur, c'est-à-dire dont le constituant biocide n'est pas susceptible de «transpirer» et d'être relarguée à la surface du matériau et dans le milieu extérieur.

Un tel but a été obtenu selon l'invention grâce à l'utilisation du produit objet de la présente invention.

Plus précisément, la présente invention se rapporte à un produit antimicrobien obtenu à partir d'un système à base silicone présentant une activité biocide sur sa surface, ledit système comprenant une matrice en élastomère de silicone et une charge minérale de particules choisies dans le groupe des Silices, des Zéolithes ou des Bentonites, ou plus généralement des alumino-silicates lesdites particules étant dispersées à l'intérieur de ladite matrice et comprenant, greffées sur leur surface, des molécules du type alkysilane incorporant au moins une fonction ammonium quaternaire, dans lequel le rapport massique entre l'alkylsilane et la matrice en élastomère de silicone est inférieure à 2%.

De préférence, les molécules alkysilanes greffés sont obtenues à partir d'au moins un précurseur du type : 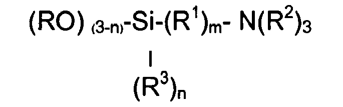 dans lequel :
- m est un nombre entier variant entre 1 inclus et 10 inclus,
- n est égal à 0, 1 ou 2,
- R représente une chaîne alkyl linéaire du type CH₃-(CH₂)_{w}-, dans laquelle w est compris entre 0 et 5 ou une forme ramifiée isomère de ladite chaîne linéaire,
- R¹ est une chaîne hydrocarbonée comprenant éventuellement des fonctions alcool et/ou éther, époxy, aryl,
- les groupements R², identiques ou différents sur un même précurseur, représentent chacun une chaîne alkyl linéaire du type (CH₂)_{z}-CH₃ avec z compris entre 1 et 30, ou une forme ramifiée isomère de ladite chaîne linéaire,
- R³ est une chaîne alkyl linéaire (CH₃-CH₂)_{w}, w étant compris entre 0 et 5, ou une forme ramifiée isomérique de ladite chaîne linéaire ou encore un autre groupement alkylsilane.

Les précurseurs dans lesquels m = 1, n = 0, w = 0, 1 ou 2, R¹ représente un alkyl linéaire du type (CH₂)_{y}, y étant compris entre 1 et 10, de préférence entre 1 et 5, ou une forme ramifiée isomère de ladite forme linéaire et dans lesquels, de préférence et pour au moins un des groupements R², z est supérieur à 15, sont particulièrement préférés selon l'invention.

Il est bien entendu que toutes les combinaisons sont possibles selon l'invention en ce qui concerne les valeurs ci-dessus exposées, que ce soit entre les plages larges ou les plages de valeurs préférées ou même les valeurs elles-mêmes. Toutes les combinaisons des valeurs notamment de m, n, w, R¹, R² et z sont envisagées et doivent être considérées comme incluse par cette simple référence dans la présente description, même si elles ne sont pas explicitement décrites afin de ne pas alourdir inutilement la présente description.

Selon un mode de réalisation privilégié, les molécules alkysilanes greffées sont obtenues à partir d'un précurseur de formule :

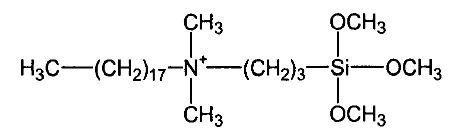

Selon l'invention, la taille moyenne des particules constituant la charge minérale est avantageusement comprise entre 0,01 micron et 500 microns, de préférence comprise entre 0,1 micron et 200 microns.

Lesdites particules peuvent être en particulier constituées par un matériau amorphe, de préférence une silice amorphe, dont l'aire surfacique est comprise entre 10 et 1000 m²/g, de préférence entre 50 et 500 m²/g.

Selon un mode préféré, le rapport massique entre l'alkylsilane et la matrice en élastomère de silicone est supérieur à 0,01%. Suivant le type et la sévérité des contaminations du milieu extérieur, le rapport massique peut être porté sans sortir du cadre de l'invention à des valeurs supérieures à 0,05% ou même supérieures à 0,1%.

D'un autre coté, il a été trouvé par le demandeur que des quantités extrêmement réduites de l'agent biocide, de l'ordre de 0,005%, voire même inférieures, engendrait toujours une activité biocide très sensible, pourvu que celui-ci soit greffé à la surface d'une charge selon l'invention. Sans sortir du cadre de l'invention, de telles quantités, par exemple des rapports massiques entre l'alkylsilane et la matrice en élastomère de silicone de l'ordre de 0,005 à 0,01 %, doivent être considérées comme également comprises dans la portée de la présente invention.

Selon un exemple applicable dans une utilisation alimentaire classique, le rapport massique peut être idéalement compris entre 0,01 et 0,2%.

Le rapport massique entre la charge minérale et la matrice en élastomère de silicone peut être compris entre 0,1% et 50%, de préférence entre 0,5 et 20%.

L'invention porte également sur l'utilisation d'un tube en élastomère de silicone tel que précédemment décrit pour l'acheminement de liquides alimentaires tels que par exemples du café, des jus de fruit, des soupes, ou autres liquides alimentaires.

Le produit selon l'invention est utile dans le domaine de l'alimentaire mais n'y est bien évidemment pas restreint. On peut notamment citer comme domaine d'utilisation possible, sans que cette liste soit restrictive, tout domaine alimentaire ou non alimentaire dans lequel la présence bactérienne peut constituer un problème, par exemple comme composant d'un clavier d'ordinateur en silicone, pour la fabrication de touches tactiles en silicone, comme joints d'étanchéité en silicone pour application sanitaire ou industrielle, pour la fabrication de tube pour la circulation de gaz ou de circuits de condensats dans les avions ou plus généralement de circuits d'air dans les avions.

Au sens de la présente description, on entend par « produit » un objet pouvant présenter toute forme en trois dimensions. A titre d'exemple, on peut citer comme de tels produits ou objets des plaques, des feuilles, des tubes, des sphères pleines ou creuses, ou tout autre volume.

On entend par élastomère de silicone tout système polymérisable en trois dimensions ayant comme monomères ou polymères de départ au moins 50% de composés à chaîne polydiméthylsiloxane. A titre d'exemples, les élastomères silicone dit à catalyse peroxyde, les élastomères silicone dit à catalyse sels de platine, les monomères ou polymères polydimethyl siloxane ayant des groupements hydrolysables (exemples : methoxy, ethoxy), et autres systèmes réticulables connus dans ce domaine.

En particulier, selon l'invention, on peut utiliser indifféremment des élastomères de silicone obtenus à partir de composition qui se réticulent à température ambiante (compositions dites RTV) ou à des températures supérieures (compositions High Temperature Vulcanizing ou HTV) sous l'effet de différents types de catalyseurs ou autres agents de réticulation. Les compositions d'élastomères initiales peuvent être choisies pour une réticulation sous l'effet d'un chauffage, ou de rayonnements tel que les UV ou les IR. Selon l'invention, on peut également utiliser des élastomères de silicone plus ou moins fonctionnalisés se présentant sous forme mono, bi ou tri-composants.

Les élastomères de silicone utilisables selon la présente invention sont par exemple ceux précédemment décrits dans la demande de brevet EP 1 115 364 A1.

A ces élastomères silicone peuvent être incorporés des composés minéraux naturels ou synthétiques, notamment du type argile, alumino-silicate, silica, des agents renforçants, des pigments, des colorants, ou autres additifs connus et couramment utilisés pour la fabrication d'élastomères en silicone.

On entend par biocide tout effet destiné à détruire, repousser ou rendre inoffensifs, par action létale ou non, les organismes nuisibles à en prévenir l'action ou à les combattre.

A titre d'exemples, les organismes nuisibles, aussi désignés dans la présente description sous les termes génériques microbe ou agent microbien, sont en général des organismes unicellulaires tels que des bactéries, levures et autres. On peut utiliser en particulier selon l'invention les biocides décrits dans le brevet US 6,572,926 B1.

On entend par surface toute partie de l'élastomère silicone étant en contact avec son environnement extérieur, qui peut être gazeux, solide, liquide, en particulier aqueux.

Selon l'invention, la réalisation de produits à base d'élastomère de silicone ayant des propriétés biocides en surface peut être avantageusement réalisée par incorporation, dans l'élastomère silicone, et de préférence avant sa réticulation, de charges minérales naturelles ou synthétiques présentant des propriétés biocides telles que décrit précédemment. Les produits finaux sont obtenus par réticulation de l'élastomère non réticulé incorporant de telles charges à activité biocide, suivant la forme tridimensionnelle recherchée, par des procédés classique d'extrusion, moulage, co-extrusion, injection ou tout autre procédé connu dans ce domaine.

Selon une réalisation possible, l'extrusion d'un élastomère silicone non réticulé contenant ladite charge, tel que décrit précédemment, permet d'obtenir, après réticulation, un tube creux dont la surface interne et externe présente une activité biocide par contact.

Selon une autre réalisation possible, la co-extrusion d'un élastomère silicone non réticulé contenant ladite charge avec un autre élastomère silicone non réticulé mais sans ladite charge permet d'obtenir un tube dont seule la surface interne ou externe présente une activité biocide, selon le type de co-extrusion utilisé.

Selon l'invention, la charge présentant une activité biocide fait donc partie intégrante de l'élastomère et ne peut en particulier pas migrer à la surface du produit pour y être relarguée dans le milieu extérieur. De telles propriétés permettent ainsi leur utilisation dans des industries ou activités sensibles aux contaminations, en particulier alimentaires.

Les exemples qui suivent, non limitatif de l'invention, sont donnés dans le but d'illustrer les avantages du produit décrit précédemment.

### Exemples :

### A- Synthèse des charges minérales

Dans un premier temps, différentes charges ont été synthétisées :
a) une charge de référence constituée uniquement par des particules de dioxyde de silice amorphes commercialisées sous la référence Cab-O-Sil M5 ® par la société Cabot.
b) une charge 1 obtenue dans les conditions suivantes :
   Dans un lit fluidisé, 30 grammes de silice amorphe Cab-O-Sil M5 ® sont introduits. 10 grammes de (trimethoxysilyl) propyldimethyloctadecyl ammonium chloride EPA 34292-1 - CAS 27668-52-6 - EINECS 248-595-8 (72% en poids dans une solution aqueuse) sont pulvérisés dans le lit fluidisé. La formule développée de cet alkylsilane comprenant une fonction amine tétrafonctionnelle (quaternaire) est la suivante : 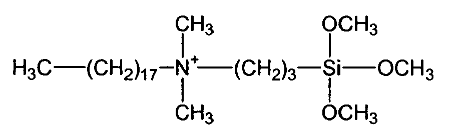
   Ce produit est actuellement commercialisé sous la référence AEM 5772® par la société Aegis Corp. Le mélange obtenu est laissé à température ambiante pendant 24 heures pour obtenir une réaction complète entre la silice et l'alkylsilane.
c) une charge 2 obtenue dans les mêmes conditions que pour la charge 1 mais par réaction, dans un lit fluidisé, entre 30 grammes de silice amorphe Cab-O-Sil M5 ® et 5 grammes de la solution aqueuse à 72% de (trimethoxysilyl) propyldimethyloctadecyl ammonium chloride.
d) une charge 3 obtenue dans les mêmes conditions que pour la charge 1 mais par réaction, dans un lit fluidisé, entre 30 grammes de silice amorphe Cab-O-Sil M5 ® et 3 grammes de la solution aqueuse à 72% de (trimethoxysilyl) propyldimethyloctadecyl ammonium chloride.

### B- Mesure du taux de molécules biocides

Dans un second temps, on a mesuré le taux d'alkylsilane n'ayant pas réagit avec la charge de silice (et potentiellement relargable en surface du produit) est déterminé selon le protocole expérimental suivant:

5 gr de la silice greffée à analyser sont introduits dans un bécher. 100 grammes d'eau distillée sont introduits et l'ensemble est agité pendant 1 heure, laissé au repos 24 heures, puis centrifugé.

Le surnageant est prélevé et filtré sur filtre millipore 0,2 µm.
10gr du filtrat recueilli sont analysés en colorimétrie à 589 nm et 595nm par réaction au bleu de bromophénol selon le protocole expérimental suivant :

### 1-établissement d'une courbe étalon :

Une solution mère d'alkylsilane est d'abord préparée par le mélange de 100µl d'une solution concentrée aqueuse comprenant 72% en poids du précurseur sont additionnés à 100gr d'eau distillée.

Différentes solutions sont ensuite préparées, correspondant à des niveaux de concentrations différents :
- 9,975 ml d'eau distillée + 25µl solution mère, soit 0,0175 mg d'agent alkylsilane comprenant l'amine quaternaire,
- 9,950 ml d'eau distillée + 50µl solution mère, soit 0,0350 mg d'agent alkylsilane,
- 9,900 ml d'eau distillée + 100µl solution mère, soit 0,0750 mg d'agent alkylsilane
- 9,750 ml d'eau distillée + 250µl solution mère, soit 0,1750 mg d'agent alkylsilane
- 10 ml d'eau distillée + 0µl solution mère, soit 0 mg d'agent alkylsilane.

On prépare également une solution de bleu de bromophénol de la façon suivante : 50 mg de bleu de bromophénol sont dissout dans 150 ml d'eau distillée et la solution est utilisée dans les 24 heures.

On mesure l'absorption à 589nm et 595nm, correspondant aux longueurs d'onde d'absorption des complexes bleu de bromophénol-amine quaternaire, afin d'établir la courbe étalon permettant la mesure de la concentration de chlorure d'ammonium quaternaire (tableau 1):

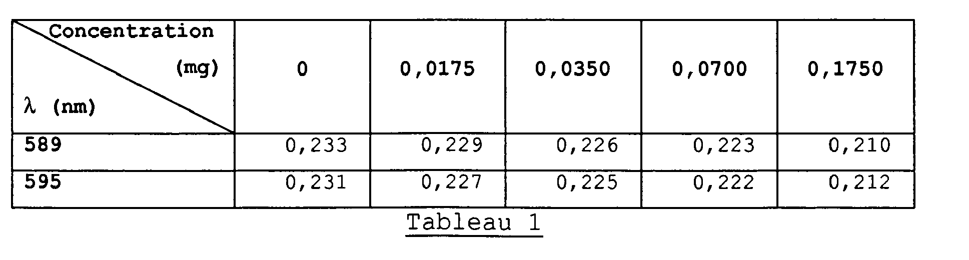

### 2- dosage des filtrats:

A 10 gr des solutions à analyser sont ajoutés 50µl de la solution de bleu de bromophénol, l'ensemble est agité quelques minutes et introduit dans un colorimètre. Les résultats obtenus sont regroupés dans le tableau 2 :

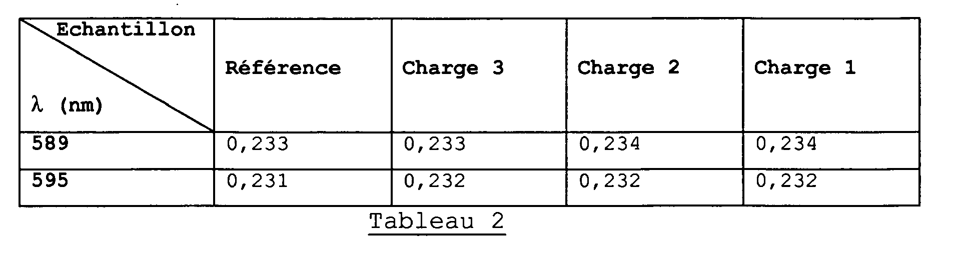

On peut ainsi établir que l'ensemble des alkylsilanes est greffé sur les différentes charges de silice (Charge 1, 2 ou 3) et que le principe actif biocide ne peut donc pas être « relargué » à la surface du produit, conformément à la présente invention.

Le même protocole expérimental a été reconduit mais avec une extraction à l'hexane des charges en silice, c'est-à-dire que l'eau distillée a été remplacée lors de l'extraction par 100gr de n-hexane. Les résultats expérimentaux montrent les mêmes propriétés de greffage de l'alkylsilane biocide sur la silice.

### D- Elaboration des produits selon l'invention

Les charges ont été incorporées selon l'invention dans une matrice en élastomère de silicone. Les différents mélanges sont effectués en utilisant comme matrice une base silicone commercialisée par la société Rhodia Silicone sous la référence Rhodorsil MF 960 U. La base silicone est vulcanisée par l'utilisation d'un produit commercialisé sous la référence Perkadox PD 50s ®, dont l'agent de vulcanisation est le 2,4- dichlorobenzoyl.

Le tableau 3 ci-dessous regroupe les proportions massiques (base 100 pour la base silicone) des différents constituants utilisés pour les 10 exemples réalisés.

**Tableau 3**

| | Ex.1 | Ex.2 | Ex.3 | Ex.4 | Ex5 | Ex.6 | Ex.7 | Ex.8 | Ex.9 | Ex.10 : Témoin |
|---|---|---|---|---|---|---|---|---|---|---|
| Base silicone | 100 | 100 | 100 | 100 | 100 | 100 | 100 | 100 | 100 | 100 |
| Perkadox Pd 50s | 1,25 | 1,25 | 1,25 | 1,25 | 1,25 | 1 | 1,3 | 1,25 | 1,25 | 1,25 |
| Charge 2 | 2 | 5 | 10 | - | - | - | - | - | - | - |
| Charge 1 | - | - | - | 2 | 5 | 10 | - | - | - | - |
| Charge 3 | - | - | - | - | - | - | 2 | 5 | 10 | - |

Plus précisément, le protocole utilisé est le suivant :
1) chauffage de la base silicone par 3 passages successifs sur cylindres verticaux,
2) introduction de la charge (1, 2 ou 3),
3) introduction du système de vulcanisation Perkadox PD 50s ®,
4) ajustement à une épaisseur de 0,5 cm pour découpe de plaques et vulcanisation,
5) vulcanisation à 100°C pendant 10 minutes sous presse, fermeture à 250 bars puis étuvage de 4 heures à 200°C pour l'obtention d'une plaque de silicone réticulée.

### E- Activité Biocide

L'activité biocide des Ex. 1 à 9 et du produit témoin a été déterminée suivant la Norme JIS Z 2801-2000. La souche bactérienne utilisée est *Escherichia coli*.

Suivant cette norme et le protocole classique, l'activité biocide des produits obtenus à partir des compositions selon les exemples 1 à 9 est mesurée par la différence entre le Log₁₀ du nombre de colonies bactériennes se développant (aussi appelé CFU dans le domaine) sur le produit traité et le Log₁₀ du nombre de colonies bactériennes se développant en l'absence de tout produit après 24 heures.

Le tableau 4 résume les résultats obtenus pour les produits selon les exemples 1 à 9, par comparaison avec le blanc (sans produit) et le produit témoin (sans charge).

**Tableau 4**

| Exemple | Charge | % massique charge/ matrice | % massique alkylsil./ matrice | Log₁₀ CFU | Réduction Log₁₀ CFU | Activité (%) |
|---|---|---|---|---|---|---|
| Blanc | - | - | - | 5,87 | - | - |
| Témoin | aucune | 0 | 0 | 4,81 | 1,06 | |
| Ex. 1 | 2 | 2 | 0,21 | 0,00 | 5,87 | >99,9 |
| Ex. 2 | 2 | 5 | 0,51 | 0,00 | 5,87 | >99,9 |
| Ex. 3 | 2 | 10 | 1,03 | 0,00 | 5,87 | >99,9 |
| Ex. 4 | 1 | 2 | 0,36 | 0,00 | 5,87 | >99,9 |
| Ex. 5 | 1 | 5 | 0,90 | 0,00 | 5,87 | >99,9 |
| Ex. 6 | 1 | 10 | 1,80 | 4,55 | 1,32 | |
| Ex. 7 | 3 | 2 | 0,13 | 0,00 | 5,87 | >99,9 |
| Ex. 8 | 3 | 5 | 0,33 | 0,00 | 5,87 | >99,9 |
| Ex. 9 | 3 | 10 | 0,66 | 0,00 | 5,87 | >99,9 |

On remarque que les produits obtenus selon l'invention permettent de réduire le développement bactérien E. Coli dans une proportion proche de 100%, démontrant ainsi une très forte activité biocide des systèmes selon l'invention. De façon surprenante, on remarque également qu'une proportion trop importante de l'agent biocide alkysilane à fonction amine quaternaire conduit à une diminution sensible de l'activité antibactérienne du produit.

### F- Etude de l'activité biocide à très faible concentration de l'alkylsilane

D'autres produits selon l'invention ont été élaborés sur le modèle des exemples 1 à 9 ci-dessus. Les échantillons ont cependant été obtenus à partir de charges 1', 2' et 3' selon un mode similaire à celui décrit précédemment mais dans lesquelles on a cette fois utilisé une solution de (trimethoxysilyl) propyldimethyloctadecyl ammonium chloride diluée à 5 % en poids dans une solution aqueuse.

Plus précisément :
- la charge l'est obtenue en pulvérisant, dans un lit fluidisé, 30 grammes de silice amorphe Cab-O-Sil M5 ® avec 10 grammes de la solution diluée (5% en poids dans une solution aqueuse) de (trimethoxysilyl) propyldimethyloctadecyl ammonium chloride,
- la charge 2' est obtenue dans les mêmes conditions que pour la charge 1' mais par réaction, dans un lit fluidisé, entre 30 grammes de silice amorphe Cab-O-Sil M5 ® et 5 grammes de la solution aqueuse à 5% de (trimethoxysilyl) propyldimethyloctadecyl ammonium chloride.
- la charge 3' est obtenue dans les mêmes conditions que pour la charge 1 mais par réaction, dans un lit fluidisé, entre 30 grammes de silice amorphe Cab-O-Sil M5 ® et 3 grammes de la solution aqueuse à 5% de (trimethoxysilyl) propyldimethyloctadecyl ammonium chloride

Le mode opératoire d'obtention des produits reste autrement identique à celui décrit précédemment en relation avec les exemples 1 à 9.

Le tableau 5 ci-dessous regroupe les proportions massiques (base 100 pour la base silicone) des différents constituants utilisés pour les 10 exemples réalisés.

**Tableau 5**

| | Ex.10 | Ex.11 | Ex.12 | Ex.13 | Ex.14 | Ex.15 | Ex.16 | Ex.17 |
|---|---|---|---|---|---|---|---|---|
| Base silicone | 100 | 100 | 100 | 100 | 100 | 100 | 100 | 100 |
| Perkadox Pd 50s | 1,25 | 1,25 | 1,25 | 1,25 | 1,25 | 1,3 | 1,25 | 1,25 |
| Charge 2' | 2 | 5 | 10 | - | - | - | - | - |
| Charge 1' | - | - | - | 2 | 5 | - | - | - |
| Charge 3' | - | - | - | - | - | 2 | 5 | 10 |

L'activité biocide des Ex. 10 à 17 a été déterminée suivant la Norme JIS Z 2801-2000 déjà décrite, la souche bactérienne utilisée étant *Escherichia coli*, selon un mode identique à celui décrit précédemment.

Le tableau 6 résume les résultats obtenus pour les produits selon les exemples 10 à 17, par comparaison avec le blanc (sans produit) et le produit témoin (sans charge).

**Tableau 6**

| Exemple | Charge | % massique charge/ matrice | % massique alkylsil./ matrice | Log₁₀ CFU | Réduction Activité Log₁₀ CFU | (%) |
|---|---|---|---|---|---|---|
| Blanc | - | - | - | 5,87 | - | - |
| Témoin | aucune | 0 | 0 | 4,81 | 1,06 | |
| Ex. 10 | 2' | 2 | 0,014 | 0,00 | 5,87 | >99,9 |
| Ex. 11 | 2' | 5 | 0,036 | 0,00 | 5,87 | >99,9 |
| Ex. 12 | 2' | 10 | 0,072 | 0,00 | 5,87 | >99,9 |
| Ex. 13 | 1 | 2 | 0,025 | 0,00 | 5,87 | >99,9 |
| Ex. 14 | 1' | 5 | 0,063 | 0,00 | 5,87 | >99,9 |
| Ex. 15 | 3' | 2 | 0,009 | 0,00 | 5,87 | >99,9 |
| Ex. 16 | 3' | 5 | 0,023 | 0,00 | 5,87 | >99,9 |
| Ex. 17 | 3' | 10 | 0,045 | 0,00 | 5,87 | >99,9 9 |

on voit dans les résultats reportés dans le tableau 6 que tous les produits obtenus selon l'invention permettent de réduire le développement bactérien E. Coli dans une proportion proche de 100%, démontrant ainsi une très forte activité biocide des systèmes selon l'invention, même pour des quantités extrêmement réduite de l'agent actif biocide, c'est-à-dire de l'alkylsilane.

De façon surprenante, on remarque ainsi qu'une proportion très faible, de l'ordre de 0,01% de l'agent biocide alkysilane à fonction amine quaternaire par rapport à la matrice, voire inférieure, conduit cependant à une forte activité antibactérienne du produit. Une telle propriété permet également avantageusement de minimiser la quantité d'agent biocide introduit dans le produit et conduit au final à minimiser les risques, dans la durée, de « transpiration » dudit agent à la surface du matériau et dans le milieu extérieur.

### G- Exemples comparatifs

On a également cherché à montrer au travers d'autres exemples comparatifs la supériorité des produits selon l'invention.

Dans les exemples comparatifs 25 à 27 qui suivent, on a introduit l'agent biocide de type alkylsilane dans la matrice au moyen d'un matériau vecteur. Ce matériau vecteur est obtenu au moyen d'une cire du type co-polymère glycol.

Plus précisément, on a obtenu les échantillons comparatifs selon le protocole expérimental suivant :

Dans un premier temps, on synthétise le matériau vecteur constitué par un mélange de l'agent biocide de type alkylsilane, le reste étant un co-polymère glycol, dans une proportion 50/50.

On synthétise ensuite l'échantillon comparatif en incorporant la charge comparative constituée par la cire et l'agent biocide dans la matrice en élastomère de silicone commercialisée par la société Rhodia Silicone sous la référence Rhodorsil MF 960 U. Comme pour les exemples précédents, la base silicone est vulcanisée par l'utilisation d'un produit commercialisé sous la référence Perkadox PD 50s ®, dont l'agent de vulcanisation est le 2,4- dichlorobenzoyl, selon le protocole décrit dans le point **D** précédent.

Le tableau 7 ci-dessous résume les caractéristiques des échantillons ainsi obtenus, par comparaison avec une autre série d'échantillons selon l'invention synthétisés parallèlement en utilisant les mêmes charges 2' et 1' que précédemment décrites. L'activité biocide de tous les échantillons (exemples 19 à 27 ci-dessous) a été évaluée selon les principes et protocoles décrit précédemment dans le point **E**.

**Tableau 7**

| Exemple | Charge (vecteur) | % massique charge (vecteur) / matrice | % massique alkylsil./ matrice | Log₁₀ CFU | Réduction Log₁₀ CFU | Activité (%) |
|---|---|---|---|---|---|---|
| Blanc | - | - | - | 3,59 | - | - |
| Ex. 19 | 2' | 2 | 0,014 | 0,00 | 3,59 | >99,9 |
| Ex. 20 | 2' | 1,27 | 0,009 | 0,00 | 3, 59 | >99,9 |
| Ex. 21 | 2' | 0,97 | 0,007 | 0,00 | 3,59 | >99,9 |
| Ex. 22 | 1' | 1,14 | 0,014 | 0,00 | 3,59 | >99,9 |
| Ex. 23 | 1' | 0,73 | 0,009 | 0,00 | 3,59 | >99,9 |
| Ex. 24 | 1' | 0,56 | 0,007 | 0,00 | 3,59 | >99,9 |
| Ex. 25 | (cire) | 0,41 | 0,206 | 0,00 | 3,59 | >99,9 |
| Ex. 26 | (cire) | 0,26 | 0,131 | 0,00 | 3,59 | >99,9 |
| Ex. 27 | (cire) | 0,20 | 0,100 | 1,77 | 1,82 | 98,5 |

On voit par comparaison avec les exemples 19 à 24 selon l'invention que l'activité biocide des échantillons comparatifs 25 à 27 est très inférieure à celle obtenue précédemment pour les échantillons selon l'invention, pour un taux de concentration de l'agent dans la matrice identique. En particulier lorsque l'agent biocide du type alkylsilane est introduit sans charge dans la matrice, l'efficacité maximale ne peut être obtenue que pour des taux en agent biocide supérieur à 0,1% poids dans la matrice. Au contraire, l'utilisation d'une charge selon l'invention permet d'obtenir une activité maximale pour des proportions en agent biocide dans la matrice 10 fois inférieures ou même 15 fois inférieures.

Une telle différence indique l'importance de la charge minérale du type silice sur laquelle sont greffées les molécules de l'agent biocide. De manière extrêmement inattendue, une telle réalisation permet de diminuer fortement le taux d'agent biocide nécessaire pour obtenir une activité maximale du produit final.

En particulier on peut également diminuer fortement, par un tel greffage, les risques qu'une partie même minime de l'agent biocide « transpire » à travers le matériau et soit rejeté dans le milieu extérieur, par exemple dans un liquide circulant à travers un tuyau alimentaire.

A travers d'autres exemples complémentaires, il a également été démontré dans le cadre de la présente invention que l'incorporation des charges en silice seules dans la matrice n'induisait aucune amélioration particulière dans l'activité biocide du matériau ainsi obtenu.

## Revendications

1. - Produit antimicrobien obtenu à partir d'un système à base silicone présentant une activité biocide sur sa surface, ledit système comprenant une matrice en élastomère de silicone et une charge minérale de particules choisies dans le groupe des Silices ou des Alumino-silicates,
lesdites particules étant dispersées à l'intérieur de ladite matrice et comprenant, greffées sur leur surface, des molécules du type alkysilane incorporant au moins une fonction ammonium quaternaire, dans lequel le rapport massique entre l'alkylsilane et la matrice en élastomère de silicone est inférieur à 2%.

2. - Produit selon la revendication 1 dans lequel les molécules alkysilanes greffés sont obtenues à partir d'au moins un précurseur du type : 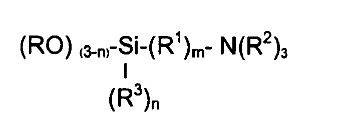 dans lequel :
- m est un nombre entier variant entre 1 inclus et 10 inclus,
- n est égal à 0, 1 ou 2,
- R représente une chaîne alkyl linéaire du type CH₃-(CH_{2)w}-, dans laquelle w est compris entre 0 et 5 ou une forme ramifiée isomérique de ladite chaîne linéaire,
- R¹ est une chaîne hydrocarbonée comprenant éventuellement des fonctions alcool et/ou éther,
- les groupements R², identiques ou différents sur un même précurseur, représentent chacun une chaîne alkyl linéaire du type (CH₂)_{z}-CH₃ avec z compris entre 1 et 30, ou une forme ramifiée isomérique de ladite chaîne linéaire,
- R³ est une chaîne alkyl linéaire (CH₃-CH₂)_{w}, w étant compris entre 0 et 5, ou une forme ramifiée isomérique de ladite chaîne linéaire ou encore un autre groupement alkylsilane.

3. - Produit selon la revendication 2 dans lequel
- m = 1,
- n = 0,
- w = 0, 1 ou 2,
- R¹ représente un alkyl linéaire du type (CH₂)_{y}, étant compris entre 1 et 10, ou une forme ramifiée isomérique de ladite forme linéaire.

4. - Produit selon la revendication 2 dans lequel les molécules alkysilanes greffées sont obtenues à partir d'un précurseur de formule :

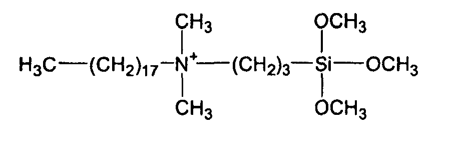

5. - Produit selon l'une des revendications précédentes dans lequel la taille moyenne des particules constituant la charge minérale est comprise entre 0,01 et 500 microns

6. - Produit selon l'une des revendications précédentes dans lequel lesdites particules sont constituées par un matériau amorphe dont l'aire surfacique est comprise entre 10 et 1000 m²/g .

7. - Produit selon l'une des revendications précédentes dans lequel le rapport massique entre l'alkylsilane et la matrice en élastomère de silicone est supérieur à 0,01% et inférieur à 2%

8. - Produit selon l'une des revendications précédentes dans lequel le rapport massique entre l'alkylsilane et la matrice en élastomère de silicone est compris entre 0,01% et 0,2%.

9. - Produit selon l'une des revendications précédentes dans lequel le rapport massique entre la charge minérale greffée avec l'alkylsilane et la matrice en élastomère de silicone est compris entre 0,1% et 50% .

10. - Utilisation d'un tube en élastomère de silicone selon l'une des revendications précédentes pour l'acheminement de liquides alimentaires ou non-alimentaires.

11. - Utilisation d'un produit antimicrobien selon l'une de revendications 1 à 9 comme composant d'un clavier d'ordinateur en silicone, pour la fabrication de touches tactiles en silicone, comme joints d'étanchéité en silicone pour application sanitaire ou industrielle, pour la fabrication de tube pour la circulation de gaz ou de circuits de condensats dans les avions ou plus généralement de circuits d'air dans les avions.

## Claims

1. An antimicrobial product obtained from a silicone-based system exhibiting a biocidal activity on its surface, said system comprising a silicone elastomer matrix and a mineral filler of particles chosen from the group of the silicas or aluminosilicates, said particles being dispersed in said matrix and comprising, grafted to their surface, molecules of the alkylsilane type incorporating at least one quaternary ammonium functional group, wherein the ratio by weight of the alkylsilane to the silicone elastomer matrix is less than 2%.

2. The product as claimed in claim 1, in which the grafted alkylsilane molecules are obtained from at least one precursor of the type: 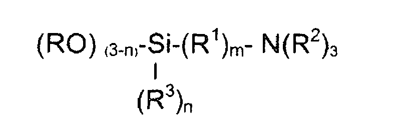 in which:
- m is an integer varying between 1 inclusive and 10 inclusive,
- n is equal to 0, 1 or 2,
- R represents a linear alkyl chain of the CH₃-(CH₂)_{w}- type, in which w is between 0 and 5, or an isomeric branched form of said linear chain,
- R¹ is a hydrocarbon chain optionally comprising alcohol and/or ether functional groups,
- the R² groups, which are identical or different on the same precursor, each represent a linear alkyl chain of the (CH₂)_{z}-CH₃ type, with z between 1 and 30, or an isomeric branched form of said linear chain,
- R³ is a linear alkyl chain CH₃-(CH₂)_{w}, w being between 0 and 5, or an isomeric branched form of said linear chain or also another alkylsilane group.

3. The product as claimed in claim 2, in which:
- m = 1,
- n = 0,
- w = 0, 1 or 2,
- R¹ represents a linear alkyl of the (CH₂)_{y} type, y being between 1 and 10, or an isomeric branched form of said linear form.

4. The product as claimed in claim 2, in which the grafted alkylsilane molecules are obtained from a precursor of formula:

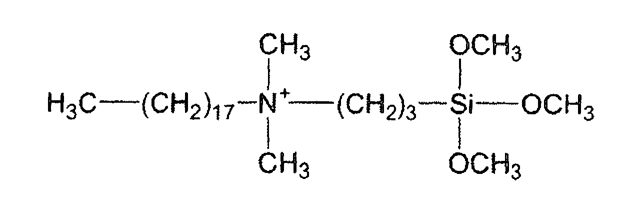

5. The product as claimed in one of the preceding claims, in which the mean size of the particles constituting the mineral filler is between 0.01 micron and 500 microns.

6. The product as claimed in one of the preceding claims, in which said particles are composed of an amorphous material, the specific surface of which is between 10 and 1000 m²/g.

7. The product as claimed in one of the preceding claims, in which the ratio by weight of the alkylsilane to the silicone elastomer matrix is greater than 0,01% and less than 2%.

8. The product as claimed in one of the preceding claims, in which the ratio by weight of the alkylsilane to the silicone elastomer matrix is between 0.01% and 0.2%.

9. The product as claimed in one of the preceding claims, in which the ratio by weight of the mineral filler grafted with alkylsilane to the silicone elastomer matrix is between 0.1% and 50%.

10. The use of a silicone elastomer tube as claimed in one of the preceding claims for the delivery of liquid foods or nonfoods.

11. The use of an antimicrobial product as claimed in one of claims 1 to 9 as component of a silicone computer keyboard, in the manufacture of silicone touch keys, as silicone leaktight seals for health or industrial applications, in the manufacture of pipes for the circulation of gases or of condensate systems in aircraft or more generally of air systems in aircraft.

## Patentansprüche

1. Antimikrobielles Produkt, das mittels eines silikonbasierten System, welches eine biozide Aktivität an seiner Oberfläche aufweist, erhalten wird, wobei das System eine Matrix aus Silikonelastomer und einen mineralischen Füllstoff aus Partikeln, ausgewählt aus der Gruppe der Siliciumdioxide oder der Aluminosilikate, umfasst, wobei die Partikel innerhalb der Matrix fein verteilt sind und - auf ihre Oberfläche aufgepfropft - Moleküle vom Typ Alkysilan umfassen, die wenigstens eine quaternäre Ammonium-Funktion einschließen, wobei das Masseverhältnis zwischen dem Alkylsilan und der Silikonelastomermatrix unter 2 % liegt.

2. Produkt nach Anspruch 1, wobei die aufgepfropften Alkysilan-Moleküle mittels wenigstens eines Präkursors vom Typ: 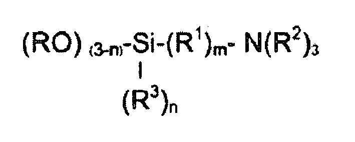 erhalten werden, worin:
- m eine Ganzzahl ist, die zwischen einschließlich 1 und einschließlich 10 variiert,
- n gleich 0, 1 oder 2 ist,
- R eine lineare Alkylkette vom Typ CH₃-(CH₂)_{w}-, worin w zwischen 0 und 5 liegt, oder eine verzweigte, isomere Form der linearen Kette darstellt,
- R¹ eine Kohlenwasserstoffkette ist, die eventuell Alkohol- und/oder Ether-Funktionen umfasst,
- die Gruppen R², identische oder unterschiedliche an einem gleichen Präkursor, jeweils eine lineare Alkylkette vom Typ (CH₂)_{z}-CH₃, mit z zwischen 1 und 30, oder eine verzweigte, isomere Form der linearen Kette darstellen,
- R³ eine lineare Alkylkette (CH₃-CH₂)_{w}, wobei w zwischen 0 und 5 liegt, oder eine verzweigte, isomere Form der linearen Kette oder aber eine weitere Alkylsilan-Gruppe ist.

3. Produkt nach Anspruch 2, wobei
- m = 1,
- n = 0,
- w = 0, 1 oder 2,
- R¹ ein lineares Alkyl vom Typ (CH₂)_{y}, wobei y zwischen 1 und 10 liegt, oder eine verzweigte, isomere Form der linearen Form darstellt.

4. Produkt nach Anspruch 2, wobei die aufgepfropften Alkysilan-Moleküle mittels eines Präkursors folgender Formel erhalten werden:

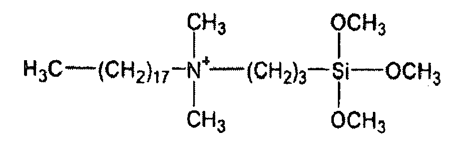

5. Produkt nach einem der vorstehenden Ansprüche, wobei die mittlere Größe der den mineralischen Füllstoff bildenden Partikel zwischen 0,01 und 500 Mikron liegt.

6. Produkt nach einem der vorstehenden Ansprüche, wobei die Partikel von einem amorphen Material gebildet sind, dessen Oberfläche zwischen 10 und 1000 m²/g beträgt.

7. Produkt nach einem der vorstehenden Ansprüche, wobei das Masseverhältnis zwischen dem Alkylsilan und der Silikonelastomermatrix über 0,01 % und unter 2 % liegt.

8. Produkt nach einem der vorstehenden Ansprüche, wobei das Masseverhältnis zwischen dem Alkylsilan und der Silikonelastomermatrix im Bereich zwischen 0,01 % und 0,2 % liegt.

9. Produkt nach einem der vorstehenden Ansprüche, wobei das Masseverhältnis zwischen dem mit Alkylsilan gepfropften mineralischen Füllstoff und der Silikonelastomermatrix im Bereich zwischen 0,1 % und 50 % liegt.

10. Verwendung eines Rohrs aus Silikonelastomer nach einem der vorstehenden Ansprüche, für das Befördern von zur Ernährung oder nicht zur Ernährung bestimmten Flüssigkeiten.

11. Verwendung eines antimikrobiellen Produkts nach einem der Ansprüche 1 bis 9, als Bestandteil einer Computertastatur aus Silikon, für die Herstellung von Berührungstasten aus Silikon, als Silikondichtungen für die sanitäre oder industrielle Anwendung, für die Herstellung eines Rohrs für die Gaszirkulation oder von Kondensatkreisläufen in Flugzeugen oder allgemeiner von Luftkreisläufen in Flugzeugen.
